# EUROPEAN PATENT SPECIFICATION

(11) **EP 3 701 372 B1**
(45) Date of publication and mention of the grant of the patent: **29.03.2023**
(21) Application number: 18765786.1
(22) Date of filing: 24.08.2018
(51) Int. Cl.: G06F 9/451, G06F 3/048

(54) **DYNAMICALLY CONFIGURABLE APPLICATION CONTROL ELEMENTS**
DYNAMISCH KONFIGURIERBARE ANWENDUNGSSTEUERUNGSELEMENTE
ÉLÉMENTS DE COMMANDE D'APPLICATION POUVANT ÊTRE CONFIGURÉS DE MANIÈRE DYNAMIQUE

(43) Date of publication of application: 02.09.2020
(73) Proprietor: Google LLC, Mountain View, CA 94043 (US)
(72) Inventor: HOEFS, Jeffrey, Mountain View, California 94043 (US); KONG, Jonathan, Mountain View, California 94043 (US); FRANK, Stefan, Mountain View, California 94043 (US); MCQUIGHAN, Kelly, Mountain View, California 94043 (US)
(74) Representative: Seymour-Pierce, Alexandra Isobel
(86) International application number: PCT/US2018/047932
(87) International publication number: WO 2020/040787

(56) References cited:
- US-A1- 2017 308 292
- US-A1- 2017 337 045
- US-A1- 2018 188 906
- US-B1- 9 465 682

## Description

### BACKGROUND

Many computing devices rely on presence-sensitive displays to output a user interface (UI). A computerized watch may include a smaller sized presence-sensitive display, as compared to a mobile phone or other larger devices. As a result of the smaller size, a computerized watch may output a cluttered UI and/or the computerized watch may not always accurately interpret touch targets and therefore not always perform as intended. Some computerized watches attempt to reduce clutter by spreading the UI across multiple different cards, windows, pages, or views. With different parts of the UI located on different views, the computerized watch may require multiple user inputs and/or other more time-consuming user interactions, to navigate between the different parts of the UI, and to cause the computerized watch to perform an intended operation.

US 9,465,682 B1 discloses that a computing device may receive from a first application executing on at least one processor an indication of an action to be performed. The computing device may determine, based on at least the indication of the action to be performed, a plurality of deep links to a plurality of actions performable by a plurality of applications. The computing device may select a subset of deep links from the plurality of deep links. The computing device may output for display a graphical user interface including an indication of each deep link from the subset of deep links. The computing device may receive an indication of a user input, the user input corresponding to a selection of one of the deep links from the subset of deep links. A second application executing on the at least one processor may perform an action linked to by the selected deep link.

US 2017/337045 A1 discloses a computing device that receives notification data, and selects, based on the notification data, a template graphical user interface (GUI) view from a plurality of template GUI views. The computing device automatically generates, from a portion of the notification data, an application GUI view that includes the portion of the notification data included within one or more fields of the template GUI view. The computing device outputs, for display, the application GUI view.

### SUMMARY

The matter for protection is defined in the appended independent claims, with optional features defined in the dependent claims appended thereto. In general techniques of this disclosure are directed to enabling a computing device to display an application control element that changes over time to accommodate different activities or operations being performed by an application. As an example, a computerized watch outputs a user interface (UI), e.g., to a presence-sensitive display. The UI may be a part of a system screen, a home screen, or a settings screen. The UI includes both static and dynamic control elements. The static control elements are associated with respective functions that do not change over time. For example, a static control element may launch an application or adjust a particular setting (e.g., such as speaker volume, screen brightness, airplane mode, flashlight mode, or other setting). Because the static control elements may not change over time - the UI may include the same static controls, no matter what activities or operations are being performed by applications that are communicating with the computerized watch. On the other hand, the dynamic control elements do change over time, for example, to handle the different types of functions that an application may need to perform over time. For example, a dynamic control element may include limited controls for adjusting (e.g., stop, start, pause, etc.) music playback from a music application. By including dynamic control elements in the UI in this way, the computerized watch need not require user inputs to navigate between different parts of the UI to control current activities and operations that are outside the control of system services. As such, the computerized watch may require fewer user inputs, or at least enable faster user input, to effect operations of applications that execute outside the system services, thereby reducing power consumption as the computerized watch has to process fewer instructions to handle the reduced inputs.

Throughout the disclosure, examples are described where a computing device and/or computing system may analyze information (e.g., ongoing operations or activities) associated with the computing system and/or device only if the computing system and/or device receives explicit permission from a user to analyze the information. For example, in situations discussed below in which a computing device may collect information about various applications executing at the computing device, the user may be provided with an opportunity to provide input to control whether other applications, programs, or features of the computing device can collect and make use of the information and may further be provided with an opportunity to control what the other applications, programs, or features can or cannot do with the information. In addition, certain information may be pre-treated in one or more ways before it is transferred, stored, or otherwise used, so that personally-identifiable information is removed. Thus, the user may have control over whether information is collected and how such information, if collected, may be used by the computing device and/or computing system.

In one example, the disclosure is directed to a method according to claim 1.

In another example, the disclosure is directed to a computing system that includes means for receiving, from an application, information about a user controllable operation being performed by the application. The computing system further includes means for responsive to receiving the information about the user controllable operation being performed by the application, automatically generating a dynamic control element associated with the user controllable operations being performed by the application, wherein the dynamic control element includes: a first portion that presents at least a subset of the information about the user controllable operation being performed by the application, and a second portion that obtains user input that controls the user controllable operation. The computing system further includes means for outputting, for display, a user interface, wherein the user interface includes: the dynamic control element, and one or more static control elements that control operations being performed by the at least one system service.

In another example, the disclosure is directed to a computing device according to claim 14.

In another example, the disclosure is directed to a computer-readable storage medium according to claim 15.

The details of one or more examples are set forth in the accompanying drawings and the description below. Other features, objects, and advantages of the disclosure will be apparent from the description and drawings, and from the claims.

### BRIEF DESCRIPTION OF DRAWINGS

FIG. 1 is a conceptual diagram illustrating an example computing system configured to present a user interface having dynamic control elements, in accordance with one or more aspects of the present disclosure.
FIG. 2 is a block diagram illustrating an example computing device configured to present a user interface having dynamic control elements, in accordance with one or more aspects of the present disclosure.
FIGS. 3 and 4 are conceptual diagrams illustrating example user interfaces having dynamic control elements, in accordance with one or more aspects of the present disclosure.
FIG. 5 is a flowchart illustrating example operations performed by an example computing device configured to present a user interface having dynamic control elements, in accordance with one or more aspects of the present disclosure.

### DETAILED DESCRIPTION

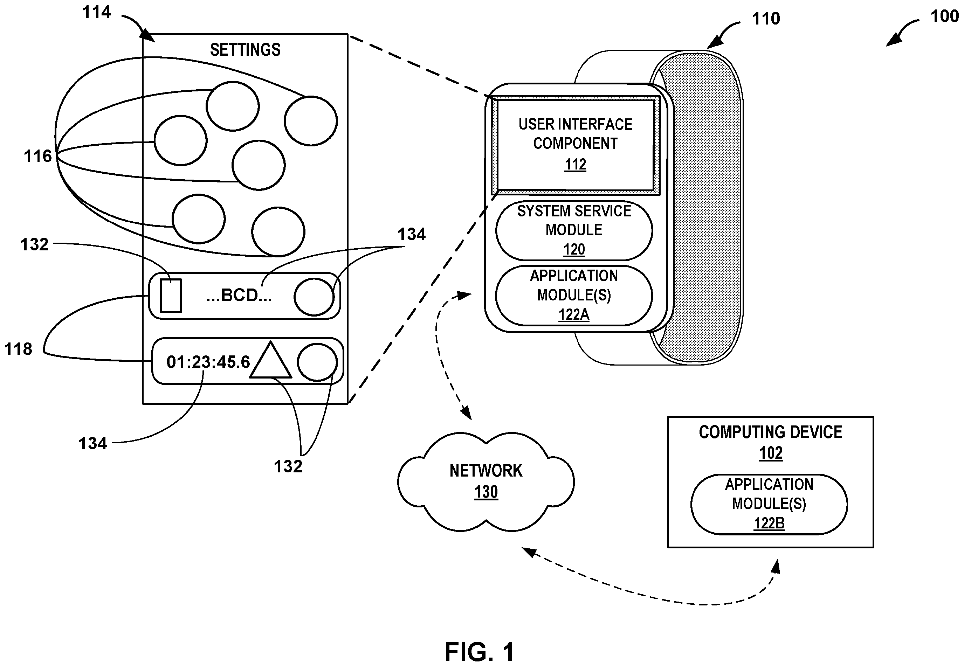

FIG. 1 is a conceptual diagram illustrating an example computing system configured to present a user interface having dynamic control elements, in accordance with one or more aspects of the present disclosure. System 100 includes computing devices 102 and 110 each communicatively coupled to network 130. Although operations attributed to system 100 are described primarily as being performed by computing devices 102 and 110, in some examples, the operations of system 100 may be performed by additional or fewer computing devices and systems than what is shown in FIG. 1. For example, system 100 may include additional computing devices or remote computing systems that are communicatively coupled to network 130 for implementing the operations of system 100.

Network 130 represents any public or private communications network for transmitting data between computing systems, servers, and computing devices. Network 130 may be a public switched telephone network (PSTN), a wireless network (e.g., cellular, Wi-Fi^{®}, Bluetooth^{®}, and/or other wireless network), a wired network (e.g., a local area network (LAN), a wide area network (WAN), the Internet, etc.), an Internet Protocol (IP) telephony network, such as voice-over-IP (VoIP) network, or any other type of communications network. Network 130 may include one or more network hubs, network switches, network routers, or any other network equipment, that are operatively inter-coupled thereby providing for the exchange of information between computing devices 102 and 110. Computing devices 102 and 110 may transmit and receive data across network 130 using any suitable communication techniques.

Computing device 102 represents any suitable computing device capable of executing applications that exchange information via a network (such as network 130) to generate a user interface including dynamic control elements. Although shown as being a single computing device, computing device 102 may include multiple computing devices. Examples of computing device 102 include mobile phones, tablet computers, laptop computers, desktop computers, servers, mainframes, wearable devices (e.g., computerized watches, computerized eyewear, etc.), home automation devices, assistant devices including assistant speakers or other countertop devices, gaming consoles and systems, media players, e-book readers, television platforms, automobile navigation or infotainment systems, or any other type of mobile, non-mobile, wearable, and non-wearable computing devices configured to exchange information via a network, such as network 130.

Computing device 110 represent any computing device configured to output a UI that includes dynamic control elements, in accordance with the described techniques. While primarily described as being a computerized watch, computing device 110 may be a different type of wearable device, such as computerized glasses, etc., or some other suitable computing device. Examples of computing device 110 include mobile phones, tablet computers, laptop computers, desktop computers, servers, mainframes, wearable devices (e.g., computerized watches, computerized eyewear, etc.), home automation devices, assistant devices including assistant speakers or other countertop devices, gaming consoles and systems, media players, e-book readers, television platforms, automobile navigation or infotainment systems, or any other type of mobile, non-mobile, wearable, and non-wearable computing devices configured to output a UI with dynamic control elements and in some examples, exchange information via a network.

Computing device 110 includes system service module 120, one or more application modules 122A, and further includes user interface component ("UIC") 112 which is configured to output user interface 114. Computing device 102 includes one or more application modules 122B.

UIC 112 of computing device 110 may function as an input and/or output device for computing device 110. UIC 112 may be implemented using various technologies. For instance, UIC 112 may function as an input device using presence-sensitive input screens, microphone technologies, infrared sensor technologies, or other input device technology for use in receiving user input. UIC 112 may function as output device configured to present output to a user using any one or more display devices, speaker technologies, haptic feedback technologies, or other output device technology for use in outputting information to a user. UIC 112 may be used by computing device 110 to output, for display, a GUI, such as user interface 114.

Modules 120, 122A, and 122B may perform operations described herein using software, hardware, firmware, or a mixture of hardware, software, and firmware residing in and/or executing at one of computing devices 102 and 110. Computing devices 102 and 110 may execute modules 120, 122A, and 122B with multiple processors or multiple devices, as virtual machines executing on underlying hardware, as one or more services of an operating system or computing platform, and/or as one or more executable programs at an application layer of a computing platform. In some examples, computing devices 102 and 110 may download any of modules 120, 122A, and 122B from an application repository (e.g., an application store) or other database. In some examples, computing devices 102 and 110 are preloaded with one or more of modules 120, 122A, and 122B during production, setup, or otherwise prior to being provided to a user.

While shown in FIG. 1 as computing device 110 including system service module 120 and application modules 122A, in some examples, the functionality thereof may be distributed differently between computing devices 102 and 110. As one example, computing device 102 may include all or part of the functionality of system service module 120 and may communicate over network 130 to cause computing device 110 to output a UI, such as user interface 114, that includes dynamic control elements, in accordance with the described techniques.

Collectively referred to as "application modules 122", each of application modules 122 represents one or more executables, threads, services, or application packages that locally execute at, or are accessible from, one of computing devices 110 and 102. Application modules 122 may be implemented in hardware, software, firmware, or any combination thereof. Examples of application modules 122 are too numerous to list and include gaming applications, communication applications, productivity applications, utility applications, or any other type of application that might want to include dynamic control elements in a UI.

User interface 114 represents, any at least partially graphical, user interface that includes one or more static control elements 116 and one or more dynamic control elements 118 in accordance with the described techniques. That is, user interface 114 may be a home screen of computing device 110, a settings screen of computing device 110, or some other UI view.

Static control elements 116 may include one or more icons, widgets, or other graphical elements that, when selected via user input, cause computing device 110 to launch or perform some other function of a corresponding one of application modules 122. Each of static control elements 116 is associated with a respective primary function that does not change over time and in some cases, one or more secondary functions that may change over time. For example, a primary function of one of static control elements 116 may be launching a particular one of application modules 122 in response to a user input. A secondary function, actuated via a different type of user input than the type of input that causes the application to perform the primary function, may include executing a deep link, shortcut, or other secondary action associated with the application. In some examples, when user interface 114 is part of a settings area of a user interface, static control elements 116 may adjust a particular setting (e.g., such as speaker volume, screen brightness, airplane mode, flashlight mode, or other setting) of computing device 110. Because the primary function of static control elements 116 does not change over time - user interface 114 may include the same static control elements 116, no matter what activities or operations are being performed by application modules 122.

On the other hand, dynamic control elements 118, and the functions of dynamic control elements 118, do change over time. For example, computing device 110 may reconfigure dynamic control elements 118 to handle different types of functions that any of application modules 122 may need to perform over time. Computing device 110 may add or remove dynamical control elements 118 as needed/appropriate from user interface 114. That is, not only may the functionality that dynamic control elements 118 provide change over time, but the existence of dynamic control elements 118 within user interface 114 may be ephemeral as computing device 110 may add and remove dynamic control element 118 from user interface 114 based on the application(s) being executed by computing device 102 and/or 110.

Dynamic control elements 118 may include one or more portions 134 that present at least some information about a user controllable operation being performed by an application module 122, and dynamic control elements 118 may further include one or more portions 132 that obtain user input that controls the user controllable operation. As an example, one of dynamic control elements 118 may include controls (e.g., portions 132) for adjusting (e.g., stop, start, pause, etc.) music playback from a music application of application modules 122 and the dynamic control element may output text or graphical elements (e.g., portions 134) indicating a title or artist of a song currently being played.

By including dynamic control elements 118 in user interface 114 in this way, computing device 110 need not require user inputs to navigate away from user interface 114 to control current activities and operations of application modules 122 that are normally beyond the control of user interface 114. Computing device 110 may therefore require fewer user inputs, or at least enable faster user input, to effect operations of application modules 122 as application modules 122 execute at computing devices 102 and 110, thereby reducing power consumption of computing device 110, as computing device 110 has to process fewer instructions to handle the reduced inputs.

System service module 120 of computing device 110 controls UIC 112 including determining what UIC 112 presents and what information is exchanged between UIC 112 and other applications or components of computing devices 102 and 110. For example, system service module 120 may manage user interface 114 including determining which dynamic elements 118 to include in user interface 114 and determining where within user interface 114 to place each of dynamic elements 118.

In controlling what UIC 112 displays, system service module 120 may receive information from a component of computing devices 102 or 110, such as one of application modules 122, that forms a basis for some or all of user interface 114. In response, system service module 120 may output instructions and information to UIC 112 that cause UIC 112 to display user interface 114 according to the information received from the component of computing devices 102 or 110.

When handling input detected by UIC 112, system service module 120 may receive information from UIC 112 in response to inputs detected at locations of a presence-sensitive input component of UIC 112 that correspond to locations of a display component of UIC 112 at which elements of user interface 114 are displayed. System service module 120 disseminates information about inputs detected by UIC 112 to other components of computing device 110 for interpreting the inputs and for causing computing device 110 to perform one or more functions in response to the inputs.

System service module 120 may be part of an operating system or other application executing at computing device 110. System service 120 may be a standalone application or sub-routine executing at computing device 110 independent of the operating system of computing device 110.

In operation while managing user interface 114, system service module 120 may receive, from one of application modules 122, information about a user controllable operation being performed by that application module 122. For example, one of application modules 122A may be a music application that that is causing one or more speakers of UIC 112 to output audio of a particular song. The music application from application modules 122A my send information to system service module 120 about the particular song. The information the music application sends to system service module 120 may include an instruction or command that causes system service module 120 to include one of dynamic control elements 118 in user interface 114 that corresponds to the audio being output of the particular song.

The information that system service module 120 receives from one of application modules 122 may define how a particular one of dynamic control elements 118 should be displayed. For instance, the information may include details about what to include or what to show in any of portions 134 that are used to convey information about a user controllable operation associated with a particular one of dynamic control elements 118. Likewise, the information may include details about what to include or what to show in any of portions 132 that are used to receive user input for controlling the user controllable operation associated with the particular one of dynamic control elements 118.

Responsive to receiving the information about the user controllable operation being performed by one of application modules 122, system service module 120 may automatically generate a dynamic control element associated with the user controllable operations being performed by the one of application modules 122. In other words, system service module 120 may process the information received from one of application modules 122 to create a graphical element as part of user interface 114 that is tied to a controllable operation or activity being performed by that application module.

For example, system service module 120 may determine, from the information received from one of application modules 122, a size, position, color, shape, or other characteristic of one of dynamic control elements 118. The information may define the size, position, color, shape or other characteristic of dynamic control elements 118 in accordance with a particular syntax selected by system service module 120. Not only may the functionality that dynamic control elements 118 provide change over time due at least in part to the information received from application modules 122, but the existence of dynamic control elements 118 within user interface 114 may be ephemeral as system service module 120 may add and remove dynamic control element 118 from user interface 114 based on the application(s) being executed by computing device 102 and/or 110.

The information received from one of application modules 122 regarding dynamic control elements 118 may, in some examples, indicate a change to a function or may alter the existence of dynamic control elements 118 within user interface 114. For example, system service module 120 may determine, from the information received from one of application modules 122, a different function associated with dynamic control elements 118 than a current function currently supported by dynamic control elements 118. In response, system service module 120 may reconfigure dynamic control elements 118 to handle the different function.

The information received from one of application modules 122 regarding dynamic control elements 118 may, in some examples, indicate a need to remove or add dynamic control elements 118 to user interface 114. For example, system service module 120 may determine, from the information received from one of application modules 122, a replacement or additional dynamic control element 118 to include in user interface 114. In other instances, system service module 120 may determine that any of dynamic control elements is no longer necessary or relevant to user interface 114. In either case, system service module 120 may reconfigure dynamic control elements 118 to handle the different functions or to better support a current need of computing device 110.

System service module 120 may provide an interface, such as an application programming interface (API), to application modules 122 that is configured to exchange data for controlling appearance and function of dynamic control elements 118. The interface provided by system service module 120 may enable system service module 120 to receive, from application modules 122, information defining dynamic control elements 118. The information received from application modules 122 may further enable system service module 120 to send information to application modules 122 about user inputs associated with dynamic control elements 118. The interface may define a syntax for information exchanged between system service module 120 and application modules 122. The syntax may conform to a markup language, such as hypertext markup language (HTML), accelerated mobile pages language (AMP), extensible markup language (XML), or some other markup language. The syntax may conform to a message sharing protocol (e.g., a standard, a proprietary scheme, etc.) defined by system service or an application data sharing protocol defined by system service module 120.

System service module 120 may output, for display, user interface 114 including dynamic control elements 118, and static control elements 116. For examples, in response to generating dynamic control elements 118, system service module 120 may send instructions to UIC 112 that causes dynamic control elements 118 to appear with portions 132 and 134 so that a user of computing device 110 may influence control over operations performed by application modules 122 from user interface 114. That is, while UIC 112 outputs user interface 114, a user may provide input at a presence-sensitive input component of UIC 112 associated with one of dynamic control elements 118. System service module 120 may relay information, via the interface provided to the one of application modules 122, about the user input. In turn, the one of application modules 122 may process the information about the user input to alter or adjust the operation associated performed by the one of application modules 122. In this way, computing device 110 provides dynamic control elements 118 within user interface 114 that enable adjustments or control over operations performed by application modules 122 that may typically only be controlled from outside user interface 114 (e.g., via an application specific user interface). In other words, dynamic control elements 118 enable system service module 120, via user interface 114, to handle inputs for controlling operations that are outside of system service modules 120's control.

By including dynamic control elements in a UI in this way, a computing device, such as a computerized watch, need not require user inputs to navigate between different parts of a UI that are distributed across multiple windows, pages, views or screens, to control current activities and operations that are outside the control of a user interface being managed by a system service. As such, the computing device may require fewer user inputs, or at least enable faster user input, to effect operations of applications that execute outside the system services, thereby reducing power consumption as the computing device has to process fewer instructions to handle the reduced inputs.

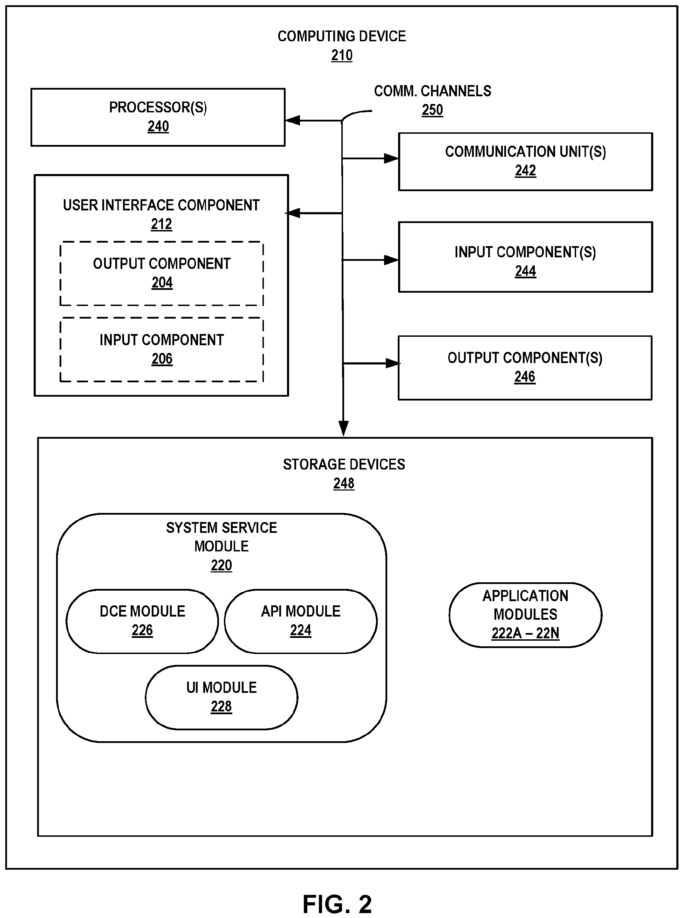

FIG. 2 is a block diagram illustrating an example computing device configured to present a user interface having dynamic control elements, in accordance with one or more aspects of the present disclosure. FIG. 2 is described in the context of FIG. 1. For example, computing device 210 of FIG. 2 is an example of computing device 110 of FIG. 1. FIG. 2 illustrates only one particular example of computing device 210, and many other examples of computing device 210 may be used in other instances and may include a subset of the components included in example computing device 210 or may include additional components not shown in FIG. 2.

As shown in the example of FIG. 2, computing device 210 includes user interface component (UIC) 212, one or more processors 240, one or more communication units 242, one or more input components 244, one or more output components 246, and one or more storage components 248. UIC 212 includes output component 204 and input component 206. Storage components 248 of computing device 210 includes system service module 220 and application modules 222A through 22N (collectively referred to as "application modules 222"). System service module 220 includes Dynamic Control Element (DCE) module 226, application programming interface (API) module 224, and user interface (UI) module 228.

Communication channels 250 may interconnect each of the components 212, 240, 242, 244, 246, and 248 for inter-component communications (physically, communicatively, and/or operatively). In some examples, communication channels 250 may include a system bus, a network connection, an inter-process communication data structure, or any other method for communicating data.

One or more communication units 242 of computing device 210 may communicate with external devices via one or more wired and/or wireless networks by transmitting and/or receiving network signals on the one or more networks. Examples of communication units 242 include a network interface card (e.g. such as an Ethernet card), an optical transceiver, a radio frequency transceiver, a GPS receiver, or any other type of telecommunication device that can send and/or receive information over a network, such as network 130 of FIG. 1. Other examples of communication units 242 may include short wave radios, cellular voice or data radios, wireless network radios, as well as universal serial bus (USB) controllers, VoIP type, IMS type, and CS type telephone transceivers, and other telephone devices.

One or more input components 244 of computing device 210 may receive input. Examples of input are tactile, audio, and video input. Input components 242 of computing device 210, in one example, includes a presence-sensitive input device (e.g., a touch sensitive screen, a PSD), mouse, keyboard, voice responsive system, video camera, microphone or any other type of device for detecting input from a human or machine. In some examples, input components 242 may include one or more sensor components one or more location sensors (GPS components, Wi-Fi components, cellular components), one or more temperature sensors, one or more movement sensors (e.g., accelerometers, gyros), one or more pressure sensors (e.g., barometer), one or more ambient light sensors, and one or more other sensors (e.g., microphone, camera, infrared proximity sensor, hygrometer, and the like). Other sensors may include a heart rate sensor, magnetometer, glucose sensor, hygrometer sensor, olfactory sensor, compass sensor, step counter sensor, to name a few other non-limiting examples.

One or more output components 246 of computing device 110 may generate output. Examples of output are tactile, audio, and video output. Output components 246 of computing device 210, in one example, includes a PSD, sound card, video graphics adapter card, speaker, cathode ray tube (CRT) monitor, liquid crystal display (LCD), or any other type of device for generating output to a human or machine.

UIC 212 of computing device 210 may be similar to UIC 112 of computing device 110 and includes output component 206 and input component 204. Output component 204 may be a display component, such as a screen at which information is displayed by UIC 212 and input component 206 may be a presence-sensitive input component, such as a touch of capacitive sensor, that detects an object at and/or near output component 202. Output component 204 and input component 206 may be a speaker and microphone pair or any other combination of one or more input and output components, such as input components 244 and output components 244. In the example of FIG. 2, UIC 212 may present a user interface with dynamic control elements (such as user interface 114 of FIG. 1).

As one example range, presence-sensitive input component 206 may detect an object, such as one or more fingers, a stylus, or one or more other inputs units that are within two inches or less of output component 204. Input component 206 may determine a location (e.g., an [x, y] coordinate) of output component 204 at which the object was detected. In another example range, input component 206 may detect an object six inches or less from output component 204 and other ranges are also possible. Input component 206 may determine the location of output component 204 selected by a user's finger using capacitive, inductive, and/or optical recognition techniques. In some examples, input component 206 also provides output to a user using tactile, audible, or visual stimuli as described with respect to output component 204.

UIC 212 of computing device 210 may detect two-dimensional and/or three-dimensional gestures as input from a user of computing device 210. For instance, a sensor of UIC 212 may detect a user's movement (e.g., moving one or more hands, arms, fingers, other body parts, pens, styluses, etc.) within a threshold distance of the sensor of UIC 212. UIC 212 may determine a two- or three-dimensional vector representation of the movement and correlate the vector representation to a gesture input (e.g., a hand-wave, a pinch, a clap, a pen stroke, etc.) that has multiple dimensions. In other words, UIC 212 can detect a multi-dimension gesture without requiring the user to gesture at or near a screen or surface at which UIC 212 outputs information for display. Instead, UIC 212 can detect a multi-dimensional gesture performed at or near a sensor which may or may not be located near the screen or surface at which UIC 212 outputs information for display.

While illustrated as an internal component of computing device 210, UIC 212 may also represent an external component that shares a data path with computing device 210 for transmitting and/or receiving input and output. For instance, in one example, UIC 212 represents a built-in component of computing device 210 located within and physically connected to the external packaging of computing device 210 (e.g., a screen on a mobile phone). In another example, UIC 212 represents an external component of computing device 210 located outside and physically separated from the packaging or housing of computing device 210 (e.g., a monitor, a projector, etc. that shares a wired and/or wireless data path with computing device 210).

One or more storage components 248 within computing device 210 may store information for processing during operation of computing device 210 (e.g., computing device 210 may store data accessed by modules 220, 222, 224, 226, and 228 during execution at computing device 210). In some examples, storage component 248 is a temporary memory, meaning that a primary purpose of storage component 248 is not long-term storage. Storage components 248 on computing device 210 may be configured for short-term storage of information as volatile memory and therefore not retain stored contents if powered off. Examples of volatile memories include random access memories (RAM), dynamic random access memories (DRAM), static random access memories (SRAM), and other forms of volatile memories known in the art.

Storage components 248, in some examples, also include one or more computer-readable storage media. Storage components 248 in some examples include one or more non-transitory computer-readable storage mediums. Storage components 248 may be configured to store larger amounts of information than typically stored by volatile memory. Storage components 248 may further be configured for long-term storage of information as non-volatile memory space and retain information after power on/off cycles. Examples of non-volatile memories include magnetic hard discs, optical discs, floppy discs, flash memories, or forms of electrically programmable memories (EPROM) or electrically erasable and programmable (EEPROM) memories. Storage components 248 may store program instructions and/or information (e.g., data) associated with modules 220, 222, 224, 226, and 228. Storage components 248 may include a memory configured to store data or other information associated with modules 220, 222, 224, 226, and 228.

One or more processors 240 may implement functionality and/or execute instructions associated with computing device 210. Examples of processors 240 include application processors, display controllers, auxiliary processors, one or more sensor hubs, and any other hardware configure to function as a processor, a processing unit, or a processing device. Modules 220, 222, 224, 226, and 228may be operable by processors 240 to perform various actions, operations, or functions of computing device 210. For example, processors 240 of computing device 210 may retrieve and execute instructions stored by storage components 248 that cause processors 240 to perform the operations described herein that are attributed to modules 220, 222, 224, 226, and 228. The instructions, when executed by processors 240, may cause computing device 210 to store information within storage components 248.

Application modules 222 are examples of executables, programs, services, and applications that execute locally at processors 240, or execute remotely and are at least accessible from computing device 210 (e.g., via network 130). Application modules 222 may include all functionality of application modules 122 of computing devices 102 and 110 of FIG. 1 and may perform similar operations application modules 122 to exchange information with at least one system service, such as system service module 220, to cause a user interface of computing device 210 to include one or more dynamic control elements. Specifically, application modules 222 may send information to system service module 220 that indicates what to include in a dynamic control element and may receive information from system service module 222 in response to user inputs associated with the dynamic control element.

System service module 220 may include all functionality of system service module 120 of computing device 110 of FIG. 1, and may perform similar operations as system service module 120 for managing a user interface (e.g., user interface 114) that includes dynamic control elements specified by application modules 222. For example, system service module 220 may generate instructions or commands for UIC 212, based on commands or instructions received from application modules 222, to cause UIC 212 to display user interface 114 including static control elements 116 and dynamic control elements 118. System service module 220 may be part of or associated with an operating platform of computing device 210. For example, system service module 220 may be a sub-module, service, or activity of an operating system of computing device 210 as opposed to being a module or application of computing device 210 that is separate from the computing platform or operating system computing device 210.

API module 224 of system service module 220 provides an interface to application modules 222 that is configured to handle data for controlling appearance and function of dynamic control elements that are included in a UI of system service module 220, such as user interface 114. That is, system service module 220 may receive, via API module 224, and from application modules 222, information about a user controllable operation being performed by application module 222 and cause UIC to display a dynamic control element associated with the operation. In response, as the user inputs are detected at the dynamic control elements of the user interface of computing device 210, system service module 220 may share, via API module 224, and with application modules 222, information about user inputs associated with the dynamic control element so that application modules 222 can determine an adjustment or change to the user controllable operation being performed by application modules 222. In this way, API module 224 provides application modules 222 with a unique way to communicate directly with system service module 220, to affect the appearance of dynamic control elements that appear in a UI that is controlled by system service module 220 and is outside the direct control of application modules 222. This unique communication interface associated with API module 224 may enable a more streamlined user experience requiring fewer user inputs and interaction time. Rather than requiring navigation outside the UI of system service module 220, API module 224 allows user interaction data to be shared with application modules 222 so that application modules 222 can directly control the operations associated with the dynamic control elements, that are outside the control of system service module 220.

Examples of the types of data exchanged via API module 224 are numerous. As some examples, API module 224 may receive data for controlling appearance and function of dynamic control elements including data specifying an application icon associated with one of application modules 222 or data specifying details of the operation being performed by one of application modules 222. The data for controlling the appearance and function of dynamic control elements may specify graphics or text included in the dynamic control element. For example, the data may specify that the graphics or text changes as the operation is performed. In some examples, the data may specify some other graphical feature or control included in the dynamic control element. For instance, a graphical feature (e.g., a button, a selector, a dongle, or other element or control) that, in response to user input at the graphical feature, affects an operation performed by the one of application modules 222.

As some additional examples of the types of data exchanged via API module 224, API module 224 may send, to application modules 222, data including an indication of user input detected at UIC 212 (e.g., information about a gesture detected at a location of a presence-sensitive input feature of input component 206 that corresponds to a location of a display feature of output component 204 at which a particular dynamic control element is output for display). In some examples, API module 224 may send data to application modules 222 that includes an indication of a voice input detected by a microphone of UIC 212 or input components 244 (e.g., a voice input from a user meant to alter a dynamic control element). In some examples, API module 224 may send data to application modules 222 via API module 224 including an indication of a haptic input (e.g., a device shake, a device rotation, etc.) detected by a sensor of UIC 212 or input components 244, that is meant to adjust a dynamic control element.

API module 224 may further provide a way for system service module 220 and application modules 222 to exchange updated information related to dynamic control elements. For example, API module 224 may receive, over time, updates to the data that change the appearance and function of the dynamic control element over time. Such updates may include instructions from application modules 222 for altering the appearance of the dynamic control element. Such updates may include feedback information provided to application modules 222, for instance, input information about a user interaction with the dynamic control element.

Application modules 222 and system service module 220 may regularly update data being exchanged via API module 224 as needed to provide a dynamic user interface at computing device 210 that continues to provide intuitive and convenient dynamic control elements for altering operations performed outside of system service module 220. Such updates may be in response to system interrupts generated by system service module 220 or such updates may be from application modules 222 proactively signaling to system service module 220 to the availability of an update.

In some examples, system service module 220 may request information about a user controllable operation being performed by one of application modules 222. Responsive to requesting the initial information or updated information about the user controllable operation, system service module 220 may receive the information or updated information about the user controllable operation being performed by the application via API module 224. In other cases, such updates may be proactively communicated to system service module 220 when one of application modules 222 sets a flag or otherwise directly or indirectly communicates with API module 224 to make system service module 220 aware of an update.

For example, API module 224 or other part of system service module 220 may generate an interrupt that signals one of application modules 222 to provide initial information or updated information to API module 224 (if available) and to acknowledge when complete. API module 224 or the other part of system service module 220 may interrupt each application module 222 that is associated with a dynamic control element to enable each of application modules 222 an opportunity to provide updated information.

DCE module 226 of system service module 220 automatically generates dynamic control elements, for inclusion in a user interface managed by system service module 220, based on information API module 224 exchanges with application modules 222. DCE module 226 may track, on behalf of system service module 220, which application modules 222 have dynamic control elements to manage, and may maintain information specifying where and how to present the dynamic control elements.

For example, responsive to API module 224 receiving information from application module 222A, DCE module 226 may process the information and generate a dynamic control element. DCE module 226 may identify parts of the information that specify portions for conveying output to a user as well as parts of the information that specify portions for receiving input from the user. DCE module 226 and application modules 222 may use a particular syntax or format for exchanging data.

The data may include specific parameters that indicate locations, sizes, colors, shapes, and other characteristics of a dynamic control. Other parameters may include locations within memory components of storage devices 248 at which application modules 222 maintains other data not conveyed via API module 224. For example, a parameter may specify a pointer to a memory location at which DCE module 226 is to store user input values or retrieve application defined output values in conjunction with generating dynamic control elements.

In some examples, DCE module 226 includes a set of dynamic control element templates. The templates may have one or more predefined fields associated with one or more output variables (e.g., specifying how the dynamic control element operates) and one or more input variables (e.g., specifying how to receive input associated with the dynamic control element). Based on the information DCE module 226 receives from API module 224, DCE module 226 may populate the fields of a particular template that is associated with a particular one of application modules 222 to generate a dynamic control element for controlling operations of that particular one of application modules 222.

DCE module 226 may maintain a record of all dynamic control elements currently being managed by system service module 220. For instance, responsive to generating a dynamic control element, DCE module 226 may add, to the record, an identifier of at least one of the dynamic control element or the application. The identifier may include an application name, a numerical identifier for one of application modules 222, an application developer, an application category, or other identifying information about one of application modules 222.

DCE module 226 may monitor traffic being exchanged between API module 224 and application modules 222 to determine whether any dynamic controls are obsolete or no longer needed. For example, DCE module 226 may identify a flag, a command, a variable value, or other indication in the data from application modules 222 indicating that an operation is no longer being performed.

Based on information obtained via API module 224 from application modules 222, DCE module 226 may determine, in connection with a particular dynamic control element, whether a user controllable operation being performed by one of application modules 222 has completed or not. For example, DCE module 226 may, in response to identifying an indication in the data from application modules 222 that an operation is no longer being performed, update the record to reflect the change in status of the operation. In other words, responsive to determining that a user controllable operation being performed by one of application modules 122 has completed, been interrupted, or otherwise stopped, DCE module 226 may instruct system service module 220 (e.g., UI module 228) to remove the dynamic control element from user interface 114. DCE module 226 may remove, from the record of dynamic controls, the identifier of at least one of the dynamic control element or the one of application modules 222.

In some examples, DCE module 226 may determine, based on the information obtained via API module 224, a size or position of the respective portion of the user interface of system service module 220 that is allocated to the dynamic control element. In other words, some dynamic controls may have different characteristics (e.g., size, color, shape, rotation, etc.) with the characteristics being defined by the data shared by application modules 222 via API module 224.

While API module 224 handles data transfers between system service module 220 and application modules 222, and DCE module 226 manages and tracks dynamic control elements associated with application modules 222, UI module 228 manages the overall UI provided by system service module 220. That is, UI module 228 relies on the information received from DCE module 226 about the various dynamic control elements that are available for inclusion in the UI of system service module 220, and uses that information to allocate space in the UI for the dynamic control elements.

UI module 228 allocates space for dynamic control elements, while considering and handling the placement of other elements of the UI, such as the positioning of static control elements or other features of the UI. For example, prior to API module 224 receiving the information about a user controllable operation being performed by one of application modules 222, UI module 228 may reserve or otherwise allocate portions of a display feature of output component 204 of UIC 212 for displaying one or more static control elements (e.g., static control elements 116, for displaying system status information, as well as for displaying other information normally included in the UI of system service module 220). In contrast, responsive to receiving the information about a user controllable operation being performed by the one of application modules 222, and responsive to DCE module 226 dynamically generating a dynamic control element for the user controllable operation, UI module 228 may dynamically allocate or reserve a respective portion of the UI of system service module 220 for that dynamic control element. To minimize clutter or user confusion in the UI, in some examples, UI module 228 may ensure that the respective portion of the UI of system service module 220 that is allocated to the dynamic control element is different than other areas that are already allocated to the static control elements and other features of the UI. In other words, UI module 228 may ensure that dynamic control elements of the UI clearly indicate to a user how he or she may adjust an operation being performed by a particular application module 222, that is outside the control of system service module 120.

UI module 228 may enable system service module 220 to handle multiple dynamic control elements in a single UI. Each of the dynamic control elements may be associated with a single application or multiple applications.

For example, after presenting a dynamic control element within a UI that is associated with a first application from application modules 222, API module 224 may receive, from a second application (the second application being different than the first application) from application modules 222, information about a user controllable operation being performed by the second application. Responsive to receiving the information about the user controllable operation being performed by the second application, DCE module 226 may automatically generate a second dynamic control element, with the second dynamic control element being associated with the user controllable operations being performed by the second application. UI module 228 may cause UIC 212 to output, for display, an updated UI that includes the first dynamic control element, the second dynamic control element, and the one or more static control elements or other elements previously included in the UI before the second dynamic control was generated.

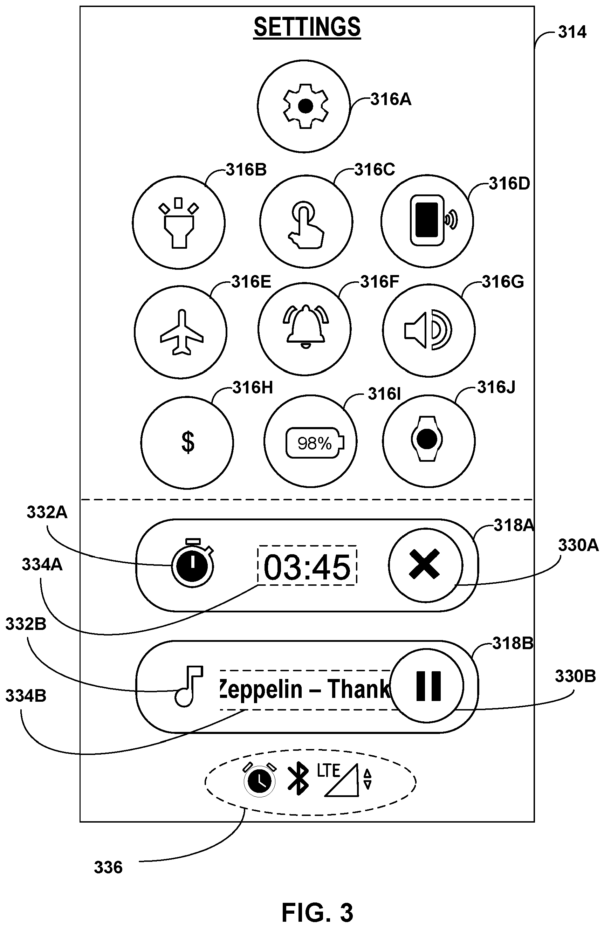

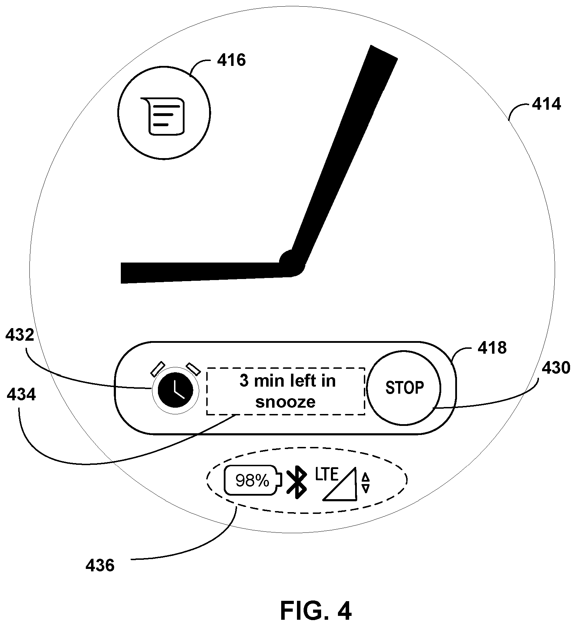

FIGS. 3 and 4 are conceptual diagrams illustrating example user interfaces having dynamic control elements, in accordance with one or more aspects of the present disclosure. FIGS. 3 and 4 are each described in the context of system 100 of FIG. 1.

FIG. 3 includes user interface 314, as an example of user interface 114 from FIG. 1. User interface 314 may be displayed as part of a settings menu or settings screen of a user interface of a computing device, such as computing device 110. For example, computing device 110 may cause UIC 212 to output user interface 314 for display as part of a settings menu of an underlying operating system of computing device 110.

User interface 314 includes static control elements 316A-316J (collectively "static control elements 316"). Each of static control elements 316 may be associated with respective functions that do not change over time. For example, when selected by a user, static control element 316A may cause computing device 110 to launch a full or more detailed settings menu, static control element 316B may cause computing device 110 to transition to flashlight mode, etc. Because static control elements 316 do not automatically change over time - computing device 110 may include substantially the same static controls 316 in user interface 314, no matter what activities or operations are being performed by applications that are executing at, or otherwise communicating with, computing device 110.

User interface 314 further include status indicators 336. Status indicators are similar to static control elements 316, except each of status indicators 336 may persist across multiple screens of user interface 314 whereas static control elements 316 may not.

User interface 314 further include dynamic control elements 318A and 318B (collectively "dynamic control elements 318"). Unlike static control elements 316, dynamic control elements 318 do change over time, for example, to handle the different types of functions that an application may need to perform over time. For example, when selected by a user, dynamic control element 318A may cause computing device 110 to control an alarm or timer feature of an application executing at or in communication with computing device 110. Whereas, when dynamic control element 318B is selected by a user, dynamic control element 318B may cause computing device 110 to control music being played by an application executing at or in communication with computing device 110.

Within each of dynamic control element 318 is at least a first portion that presents at least some of the information about the user controllable operation being performed by the application, as well as a second portion that obtains user input that controls the user controllable operation. For example, regarding the portions that present at least some of the information about the user controllable operation being performed by the application, dynamic control element 318A includes application icon 332A and dynamic control element 318B includes application icon 332B. Each of application icons 332A and 332B is associated with a particular application or a particular operation being performed by that particular application. For example, application icon 332A is stop watch icon and application icon 332B is a music icon.

In some examples, application icons 332A and 332B may change, for example, if the operation being performed changes. For example, application icon 332A may change from a stopwatch icon to an alarm clock icon if the application associated with dynamic control element 318A changes operations.

In some examples, dynamic control elements 318A and 318B include text or other graphical features that change as the operation being performed by the application is performed. For example, dynamic control element 318A includes text output 334A which indicates a current time and dynamic control element 318B includes scrolling text indicating detailed information about a current song.

Regarding the second portions that obtain user input that controls the user controllable operation, dynamic control element 318A includes input feature 330A and dynamic control element 318B includes input feature 330B. Input features 330A and 330B may include limited controls for adjusting an application's operations. Specifically, when a user selects input feature 330A, computing device 110 may cause the timer application associated with dynamic control element 318A to pause or stop the timer. Whereas, when a user selects input feature 330B, computing device 110 may cause a music application associated with dynamic control element 318B to pause or stop the song.

By including dynamic control elements 318A and 318B in part of a settings UI, as shown in FIG. 3, an example computing device need not require user inputs to navigate away from user interface 314 to control current activities and operations performed by applications that are outside the control of user interface 314. As such, computing device 110 may require fewer user inputs, or at least enable faster user input, to effect operations of applications that execute outside user interface 314, thereby reducing power consumption as computing device 110 has to process fewer instructions to handle the reduced inputs.

FIG. 4 includes user interface 414, as an example of user interface 114 from FIG. 1. User interface 414 may be displayed as a watch face of a computing device, such as computing device 110. For example, computing device 110 may cause UIC 112 to output user interface 414 for display, primarily to allow a user of computing device 110 to check time of day.

User interface 414 includes static control element 416. Similar to each of static control elements 316, static control element 416 is associated with a particular function that does not change over time. For example, when selected by a user, static control element 416 may cause computing device 110 to launch a messaging application's user interface. In other examples, user interface 414 includes additional static control elements, beyond just static control element 416.

User interface 414 further include status indicators 436. Status indicators 436 are similar to status indicators 336. Each of status indicators 436 may persist across multiple screens of user interface 414 whereas static control element 416 may not.

User interface 414 further include dynamic control element 418. Unlike static control element 416, dynamic control element 418 does change over time, for example, to handle the different types of functions that an application may need to perform over time. For example, when selected by a user, dynamic control element 418 may cause computing device 110 to stop an alarm clock or snooze feature of an application executing at or in communication with computing device 110.

Within dynamic control element 418 is at least a first portion that presents at least some of the information about the user controllable operation being performed by the application, as well as a second portion that obtains user input that controls the user controllable operation. For example, dynamic control element 418 includes application icon 432, i.e., an alarm clock icon. In some examples, application icon 432 may change, for example, if the operation being performed changes. For example, application icon 432 may change from an alarm clock icon to a stopwatch icon if the application associated with dynamic control element 418 changes from alarm to stopwatch functions. Dynamic control element 418 further includes text output 434 which indicates a current amount of snooze time remaining.

Dynamic control element 418 further includes input feature 430. Input feature 430 may include controls for adjusting an application's operations. Specifically, when a user selects input feature 430, computing device 110 may cause the alarm clock application associated with dynamic control element 418 to stop the alarm clock (or further snooze).

By including dynamic control element 418 in part of a watch face UI, as shown in FIG. 4, an example computing device need not require user inputs to navigate away from user interface 414 to control current activities and operations performed by applications that are outside the control of user interface 414. As such, computing device 110 may require fewer user inputs, or at least enable faster user input, to effect operations of applications that execute outside user interface 414, thereby reducing power consumption as computing device 110 has to process fewer instructions to handle the reduced inputs.

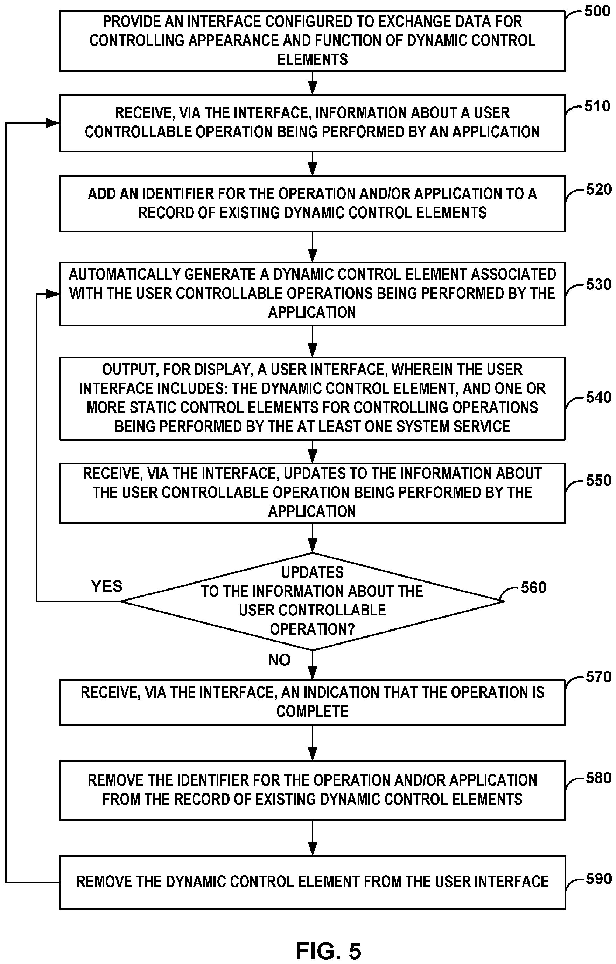

FIG. 5 is a flowchart illustrating example operations performed by an example computing device configured to present a user interface having dynamic control elements, in accordance with one or more aspects of the present disclosure. FIG. 5 is described in the context of FIG. 1. For example, operations 500 through 590 may be performed by computing device 102, 110, or a combination thereof. Operations 500 through 590 may be performed in a different order or with additional or fewer operations than those shown in FIG. 5.

In accordance with the techniques of this disclosure, computing device 110 may provide an interface configured to exchange data for controlling appearance and function of dynamic control elements (500). For example, system service module 120 provides an API via which application modules 122A and system service module 120 can exchange information to alter the function and/or appearance of dynamic control elements 118.

Computing device 110 may receive, via the interface, information about a user controllable operation being performed by an application (510). For example, system service module 120 may receive data, via an API and from an application executing at computing device 110 that indicates, among other things, a graphical feature or dynamic text to include in a dynamic control element and one or more input features for controlling a function or operation of the dynamic control element.

Computing device 110 may add an identifier for the operation and/or application to a record of existing dynamic control elements (520). For example, system service module 120 may maintain a list or other record of all dynamic control elements currently included in user interface 114. System service module 120 may assign an entry in the list to the operation and/or application associated with the data received when computing device 110 performed step 510.

Computing device 110 may automatically generate a dynamic control element associated with the user controllable operations being performed by the application (530). For example, system service module 120 may process the data received via the API to generate one of dynamic control elements 118 that includes parts 134 that present at least some of information about a user controllable operation being performed by the application (e.g., an application icon, dynamically updating text, etc.) and parts 132 that obtain user input that controls the user controllable operation (e.g., a soft button, selector, or other input feature).

Computing device 110 may output, for display, a user interface, wherein the user interface includes: the dynamic control element, and one or more static control elements for controlling operations being performed by the at least one system service (540). For example, computing device 110 may cause UIC 112 to display user interface 114 including dynamic control elements 118 and static control elements 116.

Computing device 110 may receive, via the interface, updates to the information about the user controllable operation being performed by the application (550). In response to receiving updates to the information about the user controllable operation (560, Yes branch), computing device 110 may return to steps 530 and 540 to update the dynamic control element and the user interface based on the updates. In response to not receiving updates to the information about the user controllable operation (560, No branch), computing device 110 may eventually receive, via the interface, an indication that the operation is complete (570). For example, the application associated with one of dynamic control elements 118 may send a message via the API that indicates to system service module 120 that the application is no longer performing the operation.

Computing device 110 may remove the identifier from the record of existing dynamic control elements (580) and remove the dynamic control element from the user interface (590). For example, system service module 120 may update the list of existing dynamic control elements to remove the dynamic control associated with the operation no longer being performed by the application. System service module 120 send instructions to UIC 112 that cause UIC 112 to update user interface 114 by removing the dynamic control that is removed from the record.

By way of example, and not limitation, such computer-readable storage media can comprise RAM, ROM, EEPROM, CD-ROM or other optical disk storage, magnetic disk storage, or other magnetic storage devices, flash memory, or any other storage medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage mediums and media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable medium.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some examples, the functionality described herein may be provided within dedicated hardware and/or software modules. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperative hardware units, including one or more processors as described above, in conjunction with suitable software and/or firmware.

Various embodiments have been described. These and other embodiments are within the scope of the following claims.

## Claims

1. A method comprising:
receiving (510), by at least one system service executing at a computerized watch (110), from an application that is currently executing, information about a user controllable operation being performed by the application, the computerized watch having a user interface component (112) configured to receive user input;
responsive to receiving the information about the user controllable operation being performed by the application, automatically generating (530), by the at least one system service, a dynamic control element (118, 318, 418) associated with the user controllable operation being performed by the application, wherein the dynamic control element includes:
a first portion (134, 332A, 332B, 432) that presents at least a subset of the information about the user controllable operation being performed by the application, and
a second portion (132, 330A, 330B, 430) that obtains user input that adjusts the performance of the user controllable operation being performed by the application; and
outputting (540), by the at least one system service, for display by the user interface component (112), a user interface (114, 314, 414), wherein the user interface includes: the dynamic control element, and one or more static control elements (116, 316, 416) that control operations being performed by the at least one system service, wherein the one or more static control elements are independent of operations being performed by applications (122) executing at, or communicating with, the computerized watch (110).

2. The method of claim 1, further comprising:
providing, by the at least one system service, to the application, an interface configured to exchange data for controlling appearance and function of the dynamic control element,
wherein receiving the information about the user controllable operation being performed by the application comprises receiving, via the interface, as the data for controlling appearance and function of the dynamic control element, the information about the user controllable operation being performed by the application.

3. The method of claim 2, wherein the data for controlling appearance and function of the dynamic control element comprises at least one of:
an application icon associated with the application or the operation being performed by the application;
text included in the dynamic control element, wherein the text changes as the operation being performed by the application is performed; or
a graphical feature included in the dynamic control element, wherein the graphical feature changes as the operation being performed by the application is performed.

4. The method of any of claims 2 or 3, wherein the data for controlling appearance and function of the dynamic control element comprises at least one of:
an indication of a gesture detected at a location of a presence-sensitive input device that corresponds to a location of a display device at which the dynamic control element is output for display;
an indication of a voice input detected by a microphone of the computerized watch; or
an indication of a haptic input detected by a sensor of the computerized watch.

5. The method of any of claims 2-4, further comprising:
receiving, via the interface, updates to the data for controlling appearance and function of the dynamic control element that change the appearance and function of the dynamic control element over time.

6. The method of claim 5, wherein at least one of:
the updates include instructions from the application for altering the appearance of the dynamic control element; or
the updates include input information from the at least one system service about a user interaction with the dynamic control element.

7. The method of any of claims 1-6, further comprising:
prior to receiving the information about the user controllable operation being performed by the application, allocating, by the at least one system service, a respective portion of the user interface to each of the one or more static control elements; and
further responsive to receiving the information about the user controllable operation being performed by the application, and after dynamically generating the dynamic control element, dynamically allocating, by the at least one system service, a respective portion of the user interface to the dynamic control element,
wherein the respective portion of the user interface that is allocated to the dynamic control element is different than the respective portion of the user interface that is allocated to each of the one or more static control elements,
optionally, the method further comprising:
determining, by the at least one system service, based on the information about the user controllable operation being performed by the application, a size or position of the respective portion of the user interface that is allocated to the dynamic control element.

8. The method of any of claims 1-7, further comprising:
responsive to generating the dynamic control element, adding, by the at least one system service, to a record of all dynamic controls being maintained by the at least one system, an identifier of at least one of the dynamic control element or the application;
determining, by the at least one system service, whether the user controllable operation being performed by the application has completed;
responsive to determining that the user controllable operation being performed by the application has completed, removing, by the at least one system service, the dynamic control element from the user interface; and
removing, by the at least one system service, from the record of dynamic controls being maintained by the at least one system, the identifier of at least one of the dynamic control element or the application.

9. The method of any of claims 1-8, wherein receiving the information about the user controllable operation being performed by the application comprises:
requesting, by the at least one system service, from the application, the information about the user controllable operation being performed by the application; and
responsive to requesting the information about the user controllable operation being performed by the application, receiving the information about the user controllable operation being performed by the application.

10. The method of any of claims 1-9, wherein the application is a first application executing at the computerized watch and the dynamic control element is a first dynamic control element, the method further comprising:
receiving, by the at least one system service, from a second application executing at the computerized watch, information about a user controllable operation being performed by the second application, wherein the second application is different than the first application;
responsive to receiving the information about the user controllable operation being performed by the second application, automatically generating, by the at least one system service, a second dynamic control element, the second dynamic control element being associated with the user controllable operation being performed by the second application; and
outputting, by the at least one system service, for display, an updated user interface, wherein the updated user interface includes: the first dynamic control element, the second dynamic control element, and the plurality of static control elements.

11. The method of any of claims 1-10, wherein:
the application is a timer application;
the information about the user controllable operation comprises a timer countdown; and
the dynamic control element comprises text of the timer countdown and a selectable element for stopping the timer countdown.

12. The method of any of claims 1-10, wherein:
the application is a media playback application;
the information about the user controllable operation comprises identifying information about a current media selection; and
the dynamic control element comprises auto-scrolling text of the identifying information about the current media selection.

13. The method of any of claims 1-10, wherein the application is currently executing at one or more processors of the computerized watch or at least one processor of a computing device that is different than the computerized watch.

14. A computing device (110) comprising:
a memory configured to store instructions associated with at least one system service; and
at least one processor configured to execute the instructions associated with the at least one system service to perform any of the methods of claims 1-13.

15. A computer-readable storage medium comprising instructions that, when executed, cause at least one processor of a computing device (110) to perform any of the methods of claims 1-13.

## Patentansprüche

1. Verfahren, umfassend:
Empfangen (510), durch zumindest einen Systemdienst, der auf einer computergestützten Uhr (110) ausgeführt wird, von einer Anwendung, die zur Zeit ausgeführt wird, von Informationen über eine von einem Benutzer steuerbare Operation, die von der Anwendung durchgeführt wird, wobei die computergestützte Uhr eine Benutzerschnittstellenkomponente (112) aufweist, die konfiguriert ist, Benutzereingaben zu empfangen;
in Reaktion auf das Empfangen der Informationen über die von dem Benutzer steuerbare Operation, die von der Anwendung durchgeführt wird, automatisches Erzeugen (530), durch den zumindest einen Systemdienst, eines dynamischen Steuerelements (118, 318, 418), das mit der von dem Benutzer steuerbaren Operation, die von der Anwendung durchgeführt wird, assoziiert ist, wobei das dynamische Steuerelement Folgendes beinhaltet:
einen ersten Abschnitt (134, 332A, 332B, 432), der zumindest eine Teilmenge der Informationen über die von dem Benutzer steuerbare Operation, die von der Anwendung durchgeführt wird, darstellt, und
einen zweiten Abschnitt (132, 330A, 330B, 430), der eine Benutzereingabe erhält, die die Durchführung der von dem Benutzer steuerbaren Operation, die von der Anwendung durchgeführt wird, anpasst; und
Ausgeben (540), durch den zumindest einen Systemdienst, zur Anzeige durch die Benutzerschnittstellenkomponente (112), einer Benutzeroberfläche (114, 314, 414), wobei die Benutzeroberfläche Folgendes beinhaltet: das dynamische Steuerelement und ein oder mehrere statische Steuerelemente (116, 316, 416), die Operationen, die von dem zumindest einen Systemdienst durchgeführt werden, steuern, wobei das eine oder die mehreren statischen Steuerelemente unabhängig von Operationen sind, die von Anwendungen (122) durchgeführt werden, die auf der computergestützten Uhr (110) ausgeführt werden oder mit dieser kommunizieren.

2. Verfahren nach Anspruch 1, ferner umfassend:
Bereitstellen, durch den zumindest einen Systemdienst, für die Anwendung, einer Schnittstelle, die konfiguriert ist, Daten zur Steuerung des Aussehens und der Funktion des dynamischen Steuerelements auszutauschen,
wobei das Empfangen der Informationen über die von dem Benutzer steuerbare Operation, die von der Anwendung durchgeführt wird, ein Empfangen, über die Schnittstelle, der Informationen über die von dem Benutzer steuerbare Operation, die durch die Anwendung durchgeführt wird, als die Daten zur Steuerung des Aussehens und der Funktion des dynamischen Steuerelements umfasst.

3. Verfahren nach Anspruch 2, wobei die Daten zur Steuerung des Aussehens und der Funktion des dynamischen Steuerelements zumindest eines der Folgenden umfassen:
ein Anwendungssymbol, das mit der Anwendung oder der von der Anwendung durchgeführten Operation assoziiert ist;
Text, der in dem dynamischen Steuerelement enthalten ist, wobei sich der Text bei Durchführung der von der Anwendung durchgeführten Operation verändert; oder
ein grafisches Merkmal, das in dem dynamischen Steuerelement enthalten ist, wobei sich das grafische Merkmal bei Durchführung der von der Anwendung durchgeführten Operation verändert.

4. Verfahren nach einem der Ansprüche 2 oder 3, wobei die Daten zur Steuerung des Aussehens und der Funktion des dynamischen Steuerelements zumindest eines der Folgenden umfassen:
eine Angabe darüber, dass eine Geste an einer Stelle eines präsenzempfindlichen Eingabegeräts erkannt wurde, die einer Stelle eines Anzeigegeräts entspricht, an der das dynamische Steuerelement zur Anzeige ausgegeben wird;
eine Angabe darüber, dass eine Spracheingabe von einem Mikrofon der computergestützten Uhr erkannt wurde; oder
eine Angabe darüber, dass eine haptische Eingabe von einem Sensor der computergestützten Uhr erkannt wurde.

5. Verfahren nach einem der Ansprüche 2-4, ferner umfassend:
Empfangen, über die Schnittstelle, von Aktualisierungen für die Daten zur Steuerung des Aussehens und der Funktion des dynamischen Steuerelements, die das Aussehen und die Funktion des dynamischen Steuerelements im Verlauf der Zeit verändern.

6. Verfahren nach Anspruch 5, wobei zumindest eines von Folgendem zutrifft:
die Aktualisierungen beinhalten Anweisungen von der Anwendung zum Ändern des Aussehens des dynamischen Steuerelements; oder
die Aktualisierungen beinhalten Eingabeinformationen von dem zumindest einen Systemdienst über eine Benutzerinteraktion mit dem dynamischen Steuerelement.

7. Verfahren nach einem der Ansprüche 1-6, ferner umfassend:
vor dem Empfangen der Informationen über die von dem Benutzer steuerbare Operation, die von der Anwendung durchgeführt wird, Zuweisen, durch den zumindest einen Systemdienst, eines jeweiligen Abschnitts der Benutzeroberfläche zu jedem von dem einen oder den mehreren statischen Steuerelementen; und
ferner, in Reaktion auf das Empfangen der Informationen über die von dem Benutzer steuerbare Operation, die von der Anwendung durchgeführt wird, und nach dem dynamischen Erzeugen des dynamischen Steuerelements, dynamisches Zuweisen, durch den zumindest einen Systemdienst, eines jeweiligen Abschnitts der Benutzeroberfläche zu dem dynamischen Steuerelement,
wobei sich der jeweilige Abschnitt der Benutzeroberfläche, der dem dynamischen Steuerelement zugewiesen ist, von dem jeweiligen Abschnitt der Benutzeroberfläche unterscheidet, der jedem von dem einen oder den mehreren statischen Steuerelementen zugewiesen ist,
wobei das Verfahren optional ferner Folgendes umfasst:
Ermitteln, durch den zumindest einen Systemdienst, basierend auf den Informationen über die von dem Benutzer steuerbare Operation, die von der Anwendung durchgeführt wird, einer Größe oder Position des jeweiligen Abschnitts der Benutzeroberfläche, der dem dynamischen Steuerelement zugewiesen ist.

8. Verfahren nach einem der Ansprüche 1-7, ferner umfassend:
in Reaktion auf das Erzeugen des dynamischen Steuerelements, Hinzufügen, durch den zumindest einen Systemdienst, zu einem Datensatz aller dynamischen Steuerungen, der von dem zumindest einen System verwaltet wird, einer Kennung von zumindest einem von dem dynamischen Steuerelement oder der Anwendung;
Ermitteln, durch den zumindest einen Systemdienst, ob die von dem Benutzer steuerbare Operation, die von der Anwendung durchgeführt wird, abgeschlossen wurde;
in Reaktion auf ein Ermitteln, dass die von dem Benutzer steuerbare Operation, die von der Anwendung durchgeführt wird, abgeschlossen wurde, Entfernen, durch den zumindest einen Systemdienst, des dynamischen Steuerelements von der Benutzeroberfläche; und
Entfernen, durch den zumindest einen Systemdienst, aus dem Datensatz dynamischer Steuerungen, der von dem zumindest einen System verwaltet wird, der Kennung von zumindest einem von dem dynamischen Steuerelement oder der Anwendung.

9. Verfahren nach einem der Ansprüche 1-8, wobei das Empfangen der Informationen über die von dem Benutzer steuerbare Operation, die von der Anwendung durchgeführt wird, Folgendes umfasst:
Anfordern, durch den zumindest einen Systemdienst, von der Anwendung, der Informationen über die von dem Benutzer steuerbare Operation, die von der Anwendung durchgeführt wird; und
in Reaktion auf das Anfordern der Informationen über die von dem Benutzer steuerbare Operation, die von der Anwendung durchgeführt wird, Empfangen der Informationen über die von dem Benutzer steuerbare Operation, die von der Anwendung durchgeführt wird.

10. Verfahren nach einem der Ansprüche 1-9, wobei die Anwendung eine erste Anwendung ist, die auf der computergestützten Uhr ausgeführt wird, und das dynamische Steuerelement ein erstes dynamisches Steuerelement ist, wobei das Verfahren ferner Folgendes umfasst:
Empfangen, durch den zumindest einen Systemdienst, von einer zweiten Anwendung, die auf der computergestützten Uhr ausgeführt wird, von Informationen über eine von dem Benutzer steuerbare Operation, die von der zweiten Anwendung durchgeführt wird, wobei sich die zweite Anwendung von der ersten Anwendung unterscheidet;
in Reaktion auf das Empfangen der Informationen über die von dem Benutzer steuerbare Operation, die von der zweiten Anwendung durchgeführt wird, automatisches Erzeugen, durch den zumindest einen Systemdienst, eines zweiten dynamischen Steuerelements, wobei das zweite dynamische Steuerelement mit der von dem Benutzer steuerbaren Operation, die von der zweiten Anwendung durchgeführt wird, assoziiert ist; und
Ausgeben, durch den zumindest einen Systemdienst, zur Anzeige, einer aktualisierten Benutzeroberfläche, wobei die aktualisierte Benutzeroberfläche Folgendes beinhaltet: das erste dynamische Steuerelement, das zweite dynamische Steuerelement und die Vielzahl von statischen Steuerelementen.

11. Verfahren nach einem der Ansprüche 1-10, wobei:
die Anwendung eine Timer-Anwendung ist;
die Informationen über die von dem Benutzer steuerbare Operation einen Timer-Countdown umfassen; und
das dynamische Steuerelement Text des Timer-Countdowns und ein auswählbares Element zum Stoppen des Timer-Countdowns umfasst.

12. Verfahren nach einem der Ansprüche 1-10, wobei:
die Anwendung eine Medienwiedergabeanwendung ist;
die Informationen über die von dem Benutzer steuerbare Operation Identifizierungsinformationen über eine aktuelle Medienauswahl umfassen; und
das dynamische Steuerelement einen automatisch scrollenden Text der Identifizierungsinformationen über die aktuelle Medienauswahl umfasst.

13. Verfahren nach einem der Ansprüche 1-10, wobei die Anwendung zur Zeit auf einem oder mehreren Prozessoren der computergestützten Uhr oder zumindest einem Prozessor eines Computergeräts, das sich von der computergestützten Uhr unterscheidet, ausgeführt wird.

14. Computergerät (110), umfassend:
einen Speicher, der konfiguriert ist, Anweisungen zu speichern, die mit zumindest einem Systemdienst assoziiert sind; und
zumindest einen Prozessor, der konfiguriert ist, die Anweisungen, die mit dem zumindest einen Systemdienst assoziiert sind, auszuführen, um eines der Verfahren nach Anspruch 1-13 durchzuführen.

15. Computerlesbares Speichermedium, das Anweisungen umfasst, die, bei Ausführung, zumindest einen Prozessor eines Computergeräts (110) veranlassen, eines der Verfahren nach Anspruch 1-13 durchzuführen.

## Revendications

1. Procédé comprenant :
la réception (510), par au moins un service système s'exécutant au niveau d'une montre informatisée (110), depuis une application qui est en cours d'exécution, d'informations concernant une opération commandable par l'utilisateur en cours de réalisation par l'application, la montre informatisée ayant un composant d'interface utilisateur (112) configuré pour recevoir une entrée d'utilisateur ;
en réponse à la réception des informations concernant l'opération commandable par l'utilisateur en cours de réalisation par l'application, la génération automatique (530), par l'au moins un service système, d'un élément de commande dynamique (118, 318, 418) associé à l'opération commandable par l'utilisateur en cours de réalisation par l'application, dans lequel l'élément de commande dynamique comporte :
une première partie (134, 332A, 332B, 432) qui présente au moins un sous-ensemble des informations concernant l'opération commandable par l'utilisateur en cours de réalisation par l'application, et
une deuxième partie (132, 330A, 330B, 430) qui obtient une entrée d'utilisateur qui ajuste la performance de l'opération commandable par l'utilisateur en cours de réalisation par l'application ; et
la fourniture en sortie (540), par l'au moins un service système, pour un affichage par le composant d'interface utilisateur (112), d'une interface utilisateur (114, 314, 414), dans lequel l'interface utilisateur comporte : l'élément de commande dynamique, et un ou plusieurs éléments de commande statique (116, 316, 416) qui commandent des opérations en cours de réalisation par l'au moins un service système, dans lequel les un ou plusieurs éléments de commande statique sont indépendants d'opérations en cours de réalisation par des applications (122) s'exécutant au niveau de la montre informatisée (110) ou en communication avec celle-ci.

2. Procédé selon la revendication 1, comprenant en outre :
la fourniture, par l'au moins un service système, à l'application, d'une interface configurée pour échanger des données destinées à commander l'apparence et la fonction de l'élément de commande dynamique,
dans lequel la réception des informations concernant l'opération commandable par l'utilisateur en cours de réalisation par l'application comprend la réception, via l'interface, en tant que données destinées à commander l'apparence et la fonction de l'élément de commande dynamique, des informations concernant l'opération commandable par l'utilisateur en cours de réalisation par l'application.

3. Procédé selon la revendication 2, dans lequel les données destinées à commander l'apparence et la fonction de l'élément de commande dynamique comprennent au moins l'un parmi :
une icône d'application associée à l'application ou à l'opération en cours de réalisation par l'application ;
du texte inclus dans l'élément de commande dynamique, dans lequel le texte change à mesure que l'opération en cours de réalisation par l'application est réalisée ; ou
une particularité graphique incluse dans l'élément de commande dynamique, dans lequel la particularité graphique change à mesure l'opération en cours de réalisation par l'application est réalisée.

4. Procédé selon l'une quelconque des revendications 2 ou 3, dans lequel les données destinées à commander l'apparence et la fonction de l'élément de commande dynamique comprennent au moins l'une parmi :
une indication d'un geste détecté à un emplacement d'un dispositif d'entrée sensible à la présence qui correspond à un emplacement d'un dispositif d'affichage au niveau duquel l'élément de commande dynamique est fourni en sorti pour un affichage ;
une indication d'une entrée vocale détectée par un microphone de la montre informatisée ; ou
une indication d'une entrée haptique détectée par un capteur de la montre informatisée.

5. Procédé selon l'une quelconque des revendications 2 à 4, comprenant en outre :
la réception, via l'interface, de mises à jour des données destinées à commander l'apparence et la fonction de l'élément de commande dynamique qui changent l'apparence et la fonction de l'élément de commande dynamique au fil du temps.

6. Procédé selon la revendication 5, dans lequel :
les mises à jour comportent des instructions provenant de l'application pour modifier l'apparence de l'élément de commande dynamique ; et/ou
les mises à jour comportent des informations d'entrée provenant de l'au moins un service système concernant une interaction d'utilisateur avec l'élément de commande dynamique.

7. Procédé selon l'une quelconque des revendications 1 à 6, comprenant en outre :
avant la réception des informations concernant l'opération commandable par l'utilisateur en cours de réalisation par l'application, l'attribution, par l'au moins un service système, d'une partie respective de l'interface utilisateur à chacun des un ou plusieurs éléments de commande statique ; et
en outre en réponse à la réception des informations concernant l'opération commandable par l'utilisateur en cours de réalisation par l'application, et après la génération dynamique de l'élément de commande dynamique, l'attribution dynamique, par l'au moins un service système, d'une partie respective de l'interface utilisateur à l'élément de commande dynamique,
dans lequel la partie respective de l'interface utilisateur qui est attribuée à l'élément de commande dynamique est différente de la partie respective de l'interface utilisateur qui est attribuée à chacun des un ou plusieurs éléments de commande statique,
éventuellement, le procédé comprenant en outre :
la détermination, par l'au moins un service système, sur la base des informations concernant l'opération commandable par l'utilisateur en cours de réalisation par l'application, d'une taille ou d'une position de la partie respective de l'interface utilisateur qui est attribuée à l'élément de commande dynamique.

8. Procédé selon l'une quelconque des revendications 1 à 7, comprenant en outre :
en réponse à la génération de l'élément de commande dynamique, l'ajout, par l'au moins un service système, à un enregistrement de toutes les commandes dynamiques conservé par l'au moins un système, d'un identifiant d'au moins l'un parmi l'élément de commande dynamique ou l'application ;
la détermination, par l'au moins un service système, du fait que l'opération commandable par l'utilisateur en cours de réalisation par l'application est achevée ou non ;
en réponse à la détermination du fait que l'opération commandable par l'utilisateur en cours de réalisation par l'application est achevée, le retrait, par l'au moins un service système, de l'élément de commande dynamique de l'interface utilisateur ; et
le retrait, par l'au moins un service système, de l'enregistrement de commandes dynamiques conservé par l'au moins un système, de l'identifiant d'au moins l'un parmi l'élément de commande dynamique ou l'application.

9. Procédé selon l'une quelconque des revendications 1 à 8, dans lequel la réception des informations concernant l'opération commandable par l'utilisateur en cours de réalisation par l'application comprend :
la demande, par l'au moins un service système, auprès de l'application, des informations concernant l'opération commandable par l'utilisateur en cours de réalisation par l'application ; et
en réponse à la demande des informations concernant l'opération commandable par l'utilisateur en cours de réalisation par l'application, la réception des informations concernant l'opération commandable par l'utilisateur en cours de réalisation par l'application.

10. Procédé selon l'une quelconque des revendications 1 à 9, dans lequel l'application est une première application s'exécutant au niveau de la montre informatisée et l'élément de commande dynamique est un premier élément de commande dynamique, le procédé comprenant en outre :
la réception, par l'au moins un service système, à partir d'une deuxième application s'exécutant au niveau de la montre informatisée, d'informations concernant une opération commandable par l'utilisateur en cours de réalisation par la deuxième application, dans lequel la deuxième application est différente de la première application ;
en réponse à la réception des informations concernant l'opération commandable par l'utilisateur en cours de réalisation par la deuxième application, la génération automatique, par l'au moins un service système, d'un deuxième élément de commande dynamique, le deuxième élément de commande dynamique étant associé à l'opération commandable par l'utilisateur en cours de réalisation par la deuxième application ; et
la fourniture en sortie, par l'au moins un service système, pour un affichage, d'une interface utilisateur mise à jour, dans lequel l'interface utilisateur mise à jour comporte : le premier élément de commande dynamique, le deuxième élément de commande dynamique et la pluralité d'éléments de commande statique.

11. Procédé selon l'une quelconque des revendications 1 à 10, dans lequel :
l'application est une application de minuterie ;
les informations concernant l'opération commandable par l'utilisateur comprennent un compte à rebours de minuterie ; et
l'élément de commande dynamique comprend du texte du compte à rebours de minuterie et un élément sélectionnable pour arrêter le compte à rebours de minuterie.

12. Procédé selon l'une quelconque des revendications 1 à 10, dans lequel :
l'application est une application de lecture multimédia ;
les informations concernant l'opération commandable par l'utilisateur comprennent des informations d'identification concernant une sélection multimédia en cours ; et
l'élément de commande dynamique comprend du texte à déroulement automatique des informations d'identification concernant la sélection multimédia actuelle.

13. Procédé selon l'une quelconque des revendications 1 à 10, dans lequel l'application est actuellement en exécution au niveau d'un ou de plusieurs processeurs de la montre informatisée ou au moins un processeur d'un dispositif informatique qui est différent de la montre informatisée.

14. Dispositif informatique (110), comprenant :
une mémoire configurée pour stocker des instructions associées à au moins un service système ; et
au moins un processeur configuré pour exécuter les instructions associées à l'au moins un service système pour réaliser l'un quelconque des procédés des revendications 1 à 13.

15. Support de stockage lisible par ordinateur comprenant des instructions qui, lorsqu'elles sont exécutées, amènent au moins un processeur d'un dispositif informatique (110) à réaliser l'un quelconque des procédés des revendications 1 à 13.
